# EUROPÄISCHE PATENTSCHRIFT

(11) **EP 2 612 311 B1**
(45) Veröffentlichungstag und Bekanntmachung des Hinweises auf die Patenterteilung: **29.06.2016**
(21) Anmeldenummer: 11801561.9
(22) Anmeldetag: 22.08.2011
(51) Int. Cl.: G09B 9/46, G09B 9/052, G09B 19/16, G09B 9/12, G09B 9/04, G09B 9/16, G09B 9/08, G09B 9/30

(54) **VORRICHTUNG UND VERFAHREN ZUM BETRIEB EINES FLUGSIMULATORS MIT BESONDERER REALITÄTS -ANMUTUNG**
APPARATUS AND METHOD FOR OPERATING A FLIGHT SIMULATOR WITH A SPECIAL IMPRESSION OF REALITY
DISPOSITIF ET PROCÉDÉ POUR FAIRE FONCTIONNER UN SIMULATEUR DE VOL AVEC UNE IMPRESSION DE RÉALITÉ EXCEPTIONNELLE

(30) Priorität: 30.08.2010 DE 102010035814
(43) Veröffentlichungstag der Anmeldung: 10.07.2013
(73) Patentinhaber: Grenzebach Maschinenbau GmbH, 86663 Asbach-Bäumenheim (DE)
(72) Erfinder: GUEHRING, Olaf, 82547 Eurasburg (DE)
(74) Vertreter: Kindermann, Peter
(86) Internationale Anmeldenummer: PCT/DE2011/001641
(87) Internationale Veröffentlichungsnummer: WO 2012/041268

(56) Entgegenhaltungen:
- WO-A1-2005/119625
- WO-A2-2009/089561
- FR-A1- 2 677 155
- US-A1- 2001 041 326
- ANONYMOUS: "Heli Trainer sets new standards in pilot training", INTERNET CITATION, 19. Mai 2010 (2010-05-19), Seiten 1-3, XP002639720, Gefunden im Internet: URL:http://www.kuka-robotics.com/usa/en/pr essevents/news/print/NN_100519_ Heli_Trainer.htm [gefunden am 2011-05-31]
- ANONYMOUS: "Linear units for horizontal robot traverse", INTERNET CITATION, 15. Mai 2008 (2008-05-15), Seite 1, XP002639737, Gefunden im Internet: URL:http://www.robotics.org/product-catalo g-detail.cfm/KUKA-Robotics-Corp oration/Linear-units-for-horizontal-robot- traverse/productid/1768 [gefunden am 2011-05-31]

## Beschreibung

Die Erfindung betrifft ein Verfahren und eine Vorrichtung zum Betrieb eines Flugsimulators mit besonderer Realitäts-Anmutung.

In der DE 10 2008 023 955 B4 ist ein Verfahren zur Simulation von Ereignissen und Abläufen von Luft-, Land- oder Wasserfahrzeugen und ein Simulationssystem beschrieben, womit eine Simulationseinrichtung in Echtzeit angesteuert wird , obwohl die zur Ansteuerung erforderlichen Daten lediglich von einem Nichtechtzeit-Simulationsprogramm bereitgestellt werden, wobei eine durch einen Datenmanager verursachte Latenzzeit kompensiert werden soll.

Als Echtzeit wird hierbei diejenige Zeit verstanden, die Abläufe in der realen Welt tatsächlich benötigen. Der Begriff Echtzeit meint nicht eine bestimmte Geschwindigkeit oder Verarbeitungsleistung des Programms oder der Steuerung, sondern legt nur den Zeitrahmen fest innerhalb dem das System reagieren muss. Der Begriff Latenzzeit bedeutet einen Zeitraum zwischen einer Aktion und dem Eintreten der zu erwartenden Reaktion, also eine Verzögerungszeit.

In dieser Patentschrift wird im Wesentlichen unter Schutz gestellt, dass im Falle des nicht rechtzeitigen Eintreffens von Daten die entstehende Datenlücke durch Daten aus Erfahrungswerten oder Daten aus vorangegangenen Simulationsprogrammen ersetzt wird, und diese Daten dann an die Bewegungssteuerung der Echtzeit -Simulationseinrichtung gesendet werden. Angaben zur konkreten Verbesserung der mechanischen Ausgestaltung eines Flugsimulators sind hier nicht zu erhalten.

Die DE 600 20 466 12 beschreibt einen so genannten Parallelroboter mit vier Freiheitsgraden, der eine bewegliche Platte mit vier Freiheitsgraden mit hoher Geschwindigkeit und einer hohen Beschleunigung verschieben, und die bewegliche Platte mit hoher Steifigkeit und Genauigkeit positionieren soll. Als Parallelroboter wird hierbei ein Roboter bezeichnet, bei dem eine Vielzahl von Aktuatoren parallel angeordnet sind, wobei ein solcher Roboter zum Beispiel bei einem Fahrsimulator für ein Motorfahrzeug anwendbar ist.

Zum Stand der Technik sind in dieser Druckschrift Parallelroboter mit sechs Freiheitsgraden genannt, die zum Beispiel in Flugsimulatoren, wie sie aus der US 5 333 514 und der US 5 715 729 offenbart sind, verwendet werden.

In der DE 600 20 466 T2 wird ein Parallelroboter beschrieben, der im Wesentlichen aus einer speziellen Anordnung aus einem Parallelgestänge, einer sich bewegenden Plattform, Kopplungsteilen und kinematischen Elementen besteht. Eine besondere Anwendung eines solchen Roboters in einem Flugsimulator ist hierbei nicht erwähnt.

Aus der WO 96 / 26 512 A (Übersetzung der entsprechenden europäischen Patentschrift unter DE 696 23410 T2) ist ein verbesserter Flugsimulator bekannt, der die echte Bewegung, die ein Pilot bei der Manövrierung eines Flugzeuges verspürt, genauer simulieren soll.

Hierbei wird ausgegangen von einem Bewegungssimulator mit einer Stützeinrichtung und einem Nickbewegungsholm mit einer Nickbewegungsachse, wobei der Nickbewegungsholm mit der Stützeinrichtung drehbar verbunden ist, und wobei der Bewegungssimulator folgendes umfasst:
einen Rollbewegungsholm mit einer Rollbewegungsachse , die senkrecht zur Nickbewegungsachse ist und mit dem Nickbewegungsholm drehbar verbunden ist , und eine Teilnehmerkabine mit einem Schwerpunkt , wobei die Teilnehmerkabine vom Rollbewegungsholm derart gehalten wird, dass der Schwerpunkt der Teilnehmerkabine von der Nickbewegungsachse getrennt ist. Bei diesem Flugsimulator wurde unter Schutz gestellt, dass Rollbewegungsholm mit dem Nickbewegungsholm derartig drehbar verbunden ist, dass der Rollbewegungsholm sich in einer Ebene senkrecht zur Nickbewegungsachse vollständig um den Nickbewegungsholm drehen kann. Abgesehen davon, dass dieses Merkmal lediglich Angaben enthält die eine zu erzielende Wirkung betreffen, ohne eine Angabe zur konkreten Ausführung, erscheint der hier beschriebene Flugsimulator verbesserungswürdig.

Aus der Druckschrift Anonymous: "Heli Trainer sets new standads in pilot training", Internet Citation, 19. Mai 2010, S. 1 bis 3 ist eine Vorrichtung bekannt, die zur Simulation eines Helikopters einen 6-Achs-Roboter einsetzt und diesen in Längsrichtung verfahrbar auf einer Schiene anordnet.

Weiterhin ist aus der Druckschrift WO 2009/089561 A2 ein Simulator zur Flugsimulation bekannt, bei dem die Bewegung durch einen sechs-achsigen Industrieroboter mit serieller Kinematik realisiert wird.

Desweiteren ist es bekannt, 6-Achs-Industrieroboter mit einer zusätzlichen Linearachse auszustatten (Anonymous: "Linear u-nits for horizontal robot traverse", 15.05.2008).

Die Druckschrift US 2001/ 041 326 A1 zeigt einen Simulator, mit dem Flugmanöver wie z.B. ein Gieren, Rollen, Abtauchen des Cockpits nachgestellt werden kann. Dies wird erreicht durch zwei quer übereinander angeordnete Linearachsen, auf denen in vertikaler Richtung ein Zylinder angeordnet ist. Der Zylinder ist in der Höhe verstellbar und um die vertikale Achse drehbar. Am freien Ende des Zylinders ist eine Vorrichtung vorgesehen mit zwei Kipphebeln, die ein Kippen der Vorrichtung entlang der x-Achse und/oder der y-Achse ermöglichen.

Dir Druckschrift Fr2 677 155 A1 zeigt einen Autosimulator mit einer Plattform, die in horizontaler Richtung bewegt werden kann, sowie zum Nachstellen von Schlinger- und Nickbewegungen.

Aus der Druckschrift WO 2005/119 625 A1 ist weiterhin ein Simulator bekannt, bei dem eine Kanzel durch mehrere drehbar verbundene Halteelemente so gelagert ist, dass eine Rotation der Kanzel um 360° in allen drei Raumachsen möglich ist.

Der erfindungsgemäßen Vorrichtung, bzw. dem entsprechenden Verfahren, liegt deshalb die Aufgabe zugrunde, eine Vorrichtung und ein Verfahren vorzustellen, mit dem der Betrieb eines Simulators mit besonderer Realitäts-Anmutung zum Erlernen der Beherrschung eines sich in der dreidimensionalen Realität bewegenden Fahrzeugs, insbesondere eines Fluggeräts, erreicht werden kann. Zudem soll auch für den, den Lernvorgang begleitenden, Lehrer die Möglichkeit bestehen, die Lernfortschritte und den Belastungsgrad seines Schülers objektiv überwachen zu können.

Diese Aufgabe wird hinsichtlich der Vorrichtung mit den Merkmalen nach Anspruch 1 bzw. hinsichtlich des Verfahrens mit den Maßnahmen nach Anspruch 6 gelöst.

Weitere Ausgestaltungen der Erfindung ergeben sich aus den Unteransprüchen.

Die erfindungsgemäße Vorrichtung wird im Folgenden näher beschrieben,
Es zeigen dabei im Einzelnen:
Fig. 1: eine Seitenansicht eines erfindungsgemäßen Simulators,
Fig.2: eine Seitenansicht der Projektions - Verhältnisse
Fig.3: eine Darstellung der realisierten zusätzlichen Simulationseinrichtungen und Systeme zur Erfassung der menschlichen Reaktionen.

Die grundlegende Idee der vorliegenden Erfindung besteht darin, einerseits mittels eines speziellen zweidimensional verfahrbaren 6-Achs-Roboters die Verhältnisse in einer Fahrzeugkabine, speziell eines Fluggerätes, so zu simulieren, wie sie in der Realität tatsächlich auftreten. Andererseits soll dem Schüler mittels einer realistischen Darstellung der im Betrieb zu erwartenden Umgebung eine reale Simulation der zu erwartenden Schwierigkeiten geboten werden.

Der Lehrer wiederum soll mittels, den körperlichen Zustand des Schülers repräsentierender, Daten jeder Zeit einen realistischen Eindruck über die physische und psychische Belastung und / oder der Belastbarkeit eines Schülers erhalten.

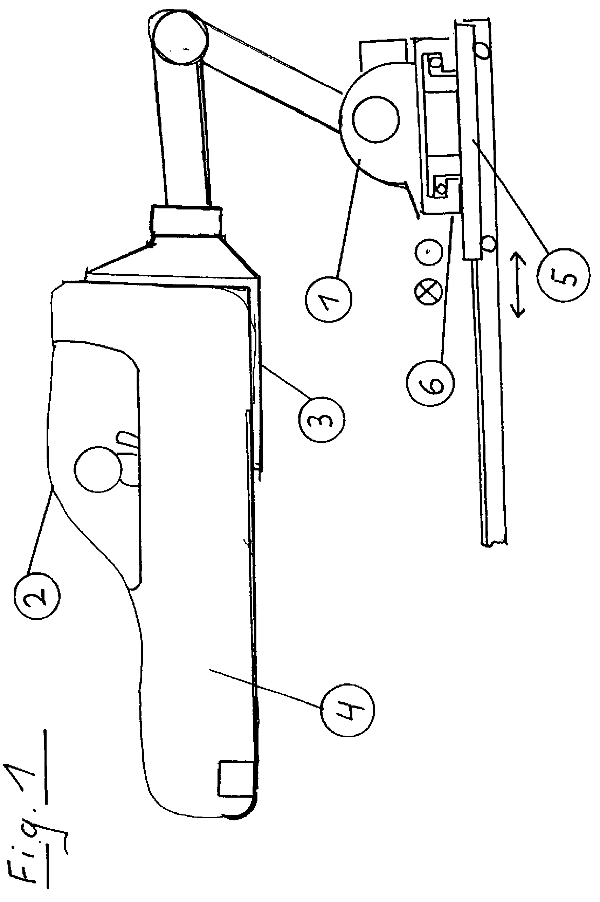

Die in der Fig. 1: gezeigte Seitenansicht eines erfindungsgemäßen Simulators lässt die hauptsächlichen Neuheiten des erfindungsgemäßen Konzepts erkennen. Ein 6 -Achs-Roboter 1 ist hierbei einerseits direkt über eine Adapterplatte 3 mit einer Fahrzeugkanzel 4, mit dem Einstieg 2, und andererseits fest mit einer Einrichtung 6 für translatorische Querbewegung verbunden. Die mit dieser Einrichtung 6 möglichen Querbewegungen sind mittels der gebräuchlichen Pfeilsymbole gekennzeichnet. Die Fahrbewegungen einer Einrichtung 5 für translatorische Längsbewegung, auf der die Einrichtung 6 installiert ist, sind mittels des gezeigten Doppelpfeils dargestellt. Diese Kombination der Einrichtungen 6 und 5 ermöglicht beschleunigte Bewegungen der Flugzeugkabine 4 zugleich in Längsrichtung und in Querrichtung, unabhängig von den Bewegungen des Roboters1. Die Längsrichtung ist hierbei durch die Längsausrichtung des Flugzeugs, also der Flugzeugkabine 4 definiert.
Da bei der Simulation der Verhältnisse in einem Fluggerät, wie beispielsweise einer Passagiermaschine, die höchsten Anforderungen an den Simulator zu enrvarten sind, wird dieser Fall im Folgenden näher betrachtet.
Der Schwerpunkt einer Passagiermaschine, oder jeden anderen Fluggerätes mit Tragflächen, liegt etwa im Bereich der Mitte dieser Tragflächen. Der Schwerpunkt ist der Punkt in dem man sich das gesamte Gewicht eines solchen Fluggeräts vereinigt denken kann und um den sich gewissermaßen die gesamte Maschine drehen kann. Der Sitz des Piloten befindet sich jedoch in der Regel, vom Schwerpunkt der Maschine entfernt, einmal in Flugrichtung nach vorne versetzt und, im Relation zum Schwerpunkt der Maschine, nach oben gerückt. Das bedeutet zum Beispiel beim Start einer Maschine, dass der Pilot nicht nur die normale Bewegung des Schwerpunktes seiner Maschine mitmacht sondern weiter noch ein zusätzliches Drehmoment erfährt, das sich im Wesentlichen aus dem Abstand seines Pilotensitzes zum Schwerpunkt der Maschine ergibt.
Im Beispiel der Fig. 1 entspricht dies etwa dem Abstand von der Mitte der Einrichtung 5 für eine translatorische Längs - Bewegung zum Sitz 4 in der Flugzeugkanzel des Flugsimulators. Zur Simulation eines Startvorgangs ist es deshalb mit dem erfindungsgemäßen Simulator möglich die Fahrzeugkanzel 4 mittels der Einrichtung 5 für translatorische Längs - Bewegung in Längsrichtung zu verfahren. Der 6 - Achs - Roboter 1 vollführt dabei die normale kombinierte Hubbewegung und Schenkbewegung eines startenden Flugzeugs. Zu diesem Zweck kann die Einrichtung 5 mit natürlicher Beschleunigung translatorisch bewegt werden. Dadurch dass die Einrichtung 6 für translatorische Querbewegung auf der Einrichtung 5 für translatorische Längsbewegung verfahrbar installiert ist, sind kombinierte beschleunigte Bewegungen beider Einrichtungen einzeln und gemeinsam möglich.

Zum Einsatz der Einrichtung 6 für translatorische Quer - Bewegung wird auf folgendes Beispiel hingewiesen.
Soll in diesem Fall eines normalen Startvorgangs noch simuliert werden, dass das Flugzeug während des Startvorgangs von Scherwinden, einer gefährlichen Form von Seitenwinden, erfasst wird, kann dies mittels des zusätzlichen Einsatzes der Einrichtung 6 für translatorische Querbewegung realitätsnah simuliert werden. Es ist hierbei selbstverständlich dass eine solche Simulation mittels der Einrichtungen 5 und 6 für translatorische Längs - bzw. Querbewegung nur solange erfolgen kann als der Fahrweg der jeweiligen Einrichtung ausgelegt ist. In der Praxis wird jedoch der Fahrweg der Einrichtung 5 für translatorische Längsbewegung länger ausgelegt sein als der der Einrichtung 6 für translatorische Querbewegung. Dies entspricht auch insofern den realen Anforderungen, da Scherwinde meist kurzzeitig und böenartig auftreten.
Gerade das unerwartete Auftreten von Scherwinden beim Start oder der Landung von Flugzeugen führt leicht zu Unfällen und ist mittels des erfindungsgemäßen Simulators realitätsnah zu simulieren.

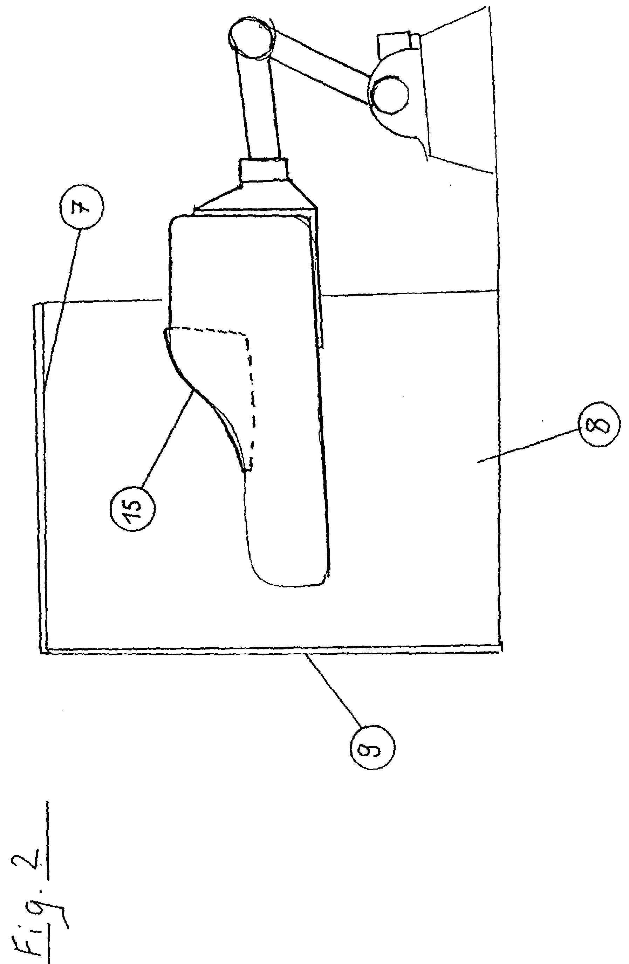

In der Fig.2: ist eine Seitenansicht der Projektions - Verhältnisse der simulierten Außenansicht in der Fahrzeugkanzel 4 skizziert.
Mit der Bezeichnung 15 ist hier eine mögliche OLED - Ansicht dargestellt, die sich als biegsamer Bildschirm den Konturen der jeweiligen Fahrzeugkanzel 4 anpassen lässt. OLED steht hier für "organic light emitting diode" und bezeichnet ein dünnflüssiges, leuchtendes Bauelement aus organischen halbleitenden Materialien das sich von den anorganischen Leuchtdioden dadurch unterscheidet, dass einerseits die Stromdichte und die Leuchtdichte geringer sind und andererseits keine einkristallinen Materialien erforderlich sind. Die OLED - Technologie ist vorrangig für Bildschirme und Displays geeignet. Ein weiteres Einsatzgebiet ist die großflächige Raumbeleuchtung.
Eine alternative Möglichkeit zur Darstellung der simulierten Außenansicht besteht darin, dass diese Außenansicht mittels Projektoren auf Projektionsflächen projiziert wird die sich außerhalb der Fahrzeugkanzel 4 befinden.
Siehe dazu: http://en.wikipedia.org/wiki/Cave Automatic Virtual Environment In der gezeigten Seitenansicht sind in diesem Fall die Projektionsfläche 9 des Frontanteils, die Projektionsfläche 8 des rechten Seiten - Anteils und die Projektionsfläche 7 des Decken - Anteils zu erkennen. Diese Projektionsflächen können mit der Fahrzeugkabine 4 verbunden sein oder im Simulationsraum installiert werden. Im letzteren Fall müssen diese Projektionsflächen natürlich in den räumlichen Abmessungen entsprechend groß ausfallen.
Es gibt hierfür geeignete Projektionsverfahren die eine Darstellung einer Szene mit Tiefencharakter auf geraden aneinander stoßenden Projektionsflächen mit geradlinig verlaufenden Stoßkanten ermöglichen, wobei diese geradlinig verlaufenden Stoßkanten für die Darstellung eines Gesamtbildes mit relativ geringem Rechenaufwand unsichtbar gemacht werden können. Dieses Unsichtbarmachen erfolgt mittels rechnertechnischem "Herausrechnen" der relativ genau definierten Stoßkanten der verwendeten Projektionsflächen.
Für den Einsatz des erfindungsgemäßen Flugsimulators zur Schulung von Helikopterpiloten kann in einer besonderen Ausgestaltung noch eine weitere Projektionsfläche vorgesehen sein die den Boden - Bereich abbildet. In diesem Fall ist die Flugzeugkanzel 4 mit einer zusätzlichen durchsichtigen Bodenplatte ausgerüstet.

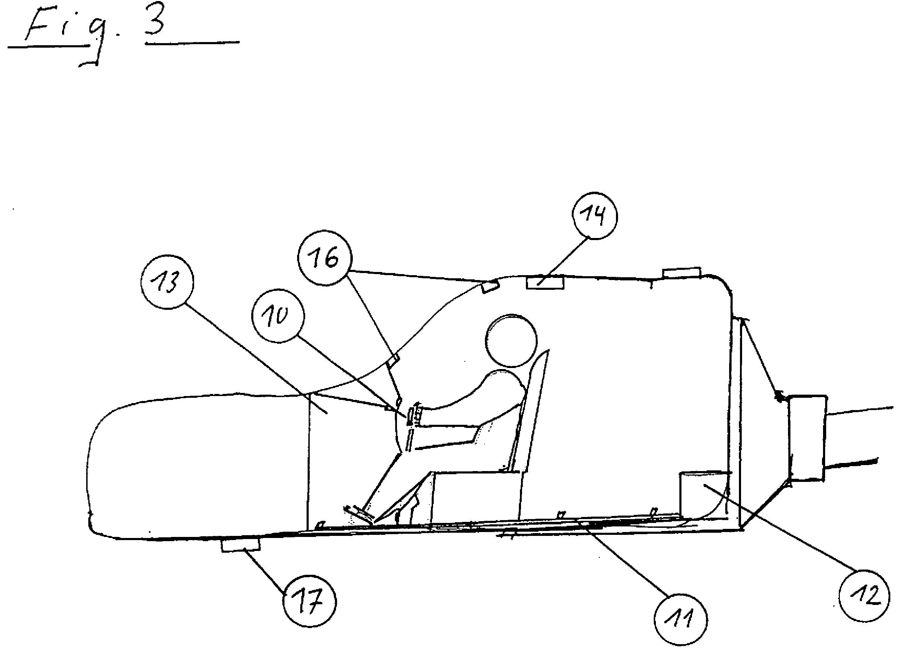

Die Fig.3 zeigt eine Darstellung der realisierten zusätzlichen Simulationseinrichtungen und Systeme zur Erfassung der menschlichen Reaktionen. Zu dem Zweck der Simulation eines an Bord ausgebrochenen Feuers ist ein zentraler Raucherzeuger 12 mit einer steuerbaren Rauchverteilung 11 vorgesehen. Mit dieser Anlage ist es dem Bediener der Simulationsanlage möglich an bestimmten, für den praktischen Einsatz wichtigen, Stellen der Fahrzeugkanzel 4 eine Rauchentwicklung von definierter Art und Intensität zu erzeugen.
Zusätzlich ist es in einer besonderen Form der Ausgestaltung möglich, die gesamte Fahrzeugkanzel 4 auf eine definierte und im praktischen Alltag vorkommende Art und Weise Rüttelbewegungen auszusetzen, wie sie zum Beispiel durch einen sich abzeichnenden Triebwerksschaden verursacht werden. Um solche auftretenden Schadensfälle noch realistischer simulieren zu können werden in dieser Ausführungsform noch zusätzliche akustische Untermalungen mittels eines aufwendigen Lautsprechersystems dem Flugschüler dargeboten. Aus Gründen der Übersichtlichkeit wurden entsprechende Einrichtungen nicht extra dargestellt. Die Anlage 14 zur Kabinenbeleuchtung lässt sich entsprechend der simulierten Realitäten hinsichtlich der Farbe und Intensität (Flackerlicht) direkt gesteuert oder programmiert verändern.
Mit der Detektoreinrichtung 16 zur Detektion einer Personenbewegung und / oder zur Erfassung der Physiognomie lassen sich die Reaktionen eines Flugschülers erfassen und / oder aufzeichnen für eine spätere Bewertung der menschlichen Reaktionen (Manöverkritik).
Einem vergleichbaren Zweck dient die Messeinrichtung 10 zur Messung des Hautwiderstandes eines Flugschülers. Am leichtesten lässt sich der Hautwiderstand im Bereich des Steuerknüppels oder einer sonstigen Steuerungseinheit messen. Auch die Oberfläche eines eventuell vorhandenen Notschalters eignet sich für diesen Zweck.

Zur Erfassung der tatsächlich realisierten Bewegungen der Fahrzeugkanzel 4 dient der Sensor 17. Die Ausgangssignale des Sensors 17 dienen der Aufzeichnung des gesamten Verlaufs einer Trainingseinheit des jeweils gefahrenen Simulationsprogramms.
Mittels des Modulsystems 13 lässt sich das verwendete Bedienfeld dem jeweils simulierten Flugzeugtyp oder Fahrzeugtyp über leicht austauschbare Einschub - Einheiten rasch anpassen.

Es ist ersichtlich, dass sich der erfindungsgemäße Flugsimulator auch zum Einsatz bei militärischen Projekten eignet, da es gerade in diesem Bereich zur Vorbereitung auf gefährliche Einsätze auf ein erhebliches Erfahrungspotenzial eines Kampfpiloten ankommt. Ein solches Erfahrungspotenzial lässt sich mit einem Flugsimulator mit besonderer Realitäts - Anmutung ohne den Einsatz von Menschenleben kostengünstig antrainieren.

Die Steuerung der komplexen Bewegungsvorgänge und die Signalverarbeitung der verwendeten Sensoren erfordert ein spezielles Steuerungsprogramm.

### Bezugszeichenliste

- 1: 6 - Achs - Roboter
- 2: Einstieg
- 3: Adapter - Platte
- 4: Fahrzeugkanzel, Flugzeugkanzel
- 5: Einrichtung für translatorische Längs - Bewegung
- 6: Einrichtung für translatorische Quer - Bewegung
- 7: Projektionsfläche des Decken - Anteils
- 8: Projektionsfläche des rechten Seiten - Anteils
- 9: Projektionsfläche des Frontanteils
- 10: Messeinrichtung zur Messung des Hautwiderstands
- 11: Rauchverteilung
- 12: Raucherzeuger
- 13: Modulsystem zum Wechsel des Bedienfeldes
- 14: Anlage zur Kabinenbeleuchtung
- 15: OLED - Display
- 16: Detektoreinrichtung zur Detektion einer Personenbewegung und / oder zur Erfassung der Physiognomie
- 17: Sensor zur Detektion der Kanzel - Bewegung

## Patentansprüche

1. Vorrichtung zum Betrieb eines Simulators mit besonderer Realitäts-Anmutung zum Erlernen der Beherrschung eines sich in der dreidimensionalen Realität bewegenden Fahrzeugs, insbesondere eines Fluggeräts,
mit einer dem zu simulierenden Fahrzeug nachgebildeten Fahrzeugkabine (4) mit realen Bedienelementen,
mit einem 6-achsigen Industrieroboter (1), der einerseits mit der Fahrzeugkabine (4) verbunden ist und
mit einer Einrichtung (5) für translatorische Längsbewegung, **dadurch gekennzeichnet, dass** sie die folgenden Merkmale aufweist:
a) der 6-achsige Industrieroboter (1) ist andererseits über eine Einrichtung (6) für translatorische Querbewegung, die auf der Einrichtung (5) für translatorische Längsbewegung im rechten Winkel verfahrbar montiert ist, mit dem Boden verbunden,
b) zur Übermittlung einer simulierten Außenansicht dient ein, den Konturen der Fahrzeugkabine (4) nachgebildetes, Display auf der Basis der OLED - Technologie,
c) zur Simulation von in der Praxis vorkommender Gefahrensituationen sind steuerbare Anlagen vorgesehen zur künstlichen Raucherzeugung (12), zur Erzeugung von Rüttelbewegungen, zur Schallerzeugung und zur Erzeugung von Lichterscheinungen (14) in der Fahrzeugkabine (4),
d) zur Erfassung von menschlichen Stressreaktionen sind steuerbare Anlagen in der Fahrzeugkabine (4) zur Erfassung des Hautwiderstandes (10) und der Detektion von Personenbewegungen und der Physiognomie (16) vorgesehen sind,
e) einen Sensor (17) zur Erfassung der tatsächlichen Bewegungen der Fahrzeugkabine (4),
f) eine Anlage zur externen Bedienung und Steuerung des Simulators, die auch die Reaktionen eines Flugschülers registriert.

2. Vorrichtung zum Betrieb eines Simulators nach Anspruch 1, **dadurch gekennzeichnet,**
**dass** zur Übermittlung einer simulierten Außenansicht anstelle der OLED-Technologie nach Merkmal b) eine Darstellung verwendet wird, die mittels Projektoren auf Projektionsflächen projiziert wird, die sich außerhalb der Fahrzeugkabine (4) befinden.

3. Vorrichtung nach einem der vorhergehenden Ansprüche, **dadurch gekennzeichnet,**
**dass** sich mittels eines Modulsystems (13) das verwendete Bedienfeld der Fahrzeugkabine (4) dem jeweils simulierten Flugzeugtyp, leicht austauschbar, rasch anpassen lässt.

4. Vorrichtung nach einem der vorhergehenden Ansprüche, **dadurch gekennzeichnet,**
**dass** zur Schulung, insbesondere von Helikopterpiloten, noch eine weitere Projektionsfläche vorgesehen ist, die den BodenBereich abbildet, und dass die Fahrzeugkabine (4) mit einer durchsichtigen Bodenplatte ausgerüstet ist.

5. Vorrichtung nach einem der vorhergehenden Ansprüche, **dadurch gekennzeichnet,**
**dass** zur Schulung im militärischen Bereich zur Simulation von in der Praxis vorkommender Gefahrensituationen militärtechnisch relevante Parameter akustischer, optischer und mechanischer Art im Trainingsprogramm vorgesehen sind.

6. Verfahren zum Betrieb eines Simulators mit besonderer Realitäts-Anmutung zum Erlernen der Beherrschung eines sich in der dreidimensionalen Realität bewegenden Fahrzeugs, insbesondere eines Fluggeräts,
wobei das Verfahren die folgenden Merkmale aufweist:
eine dem zu simulierenden Fahrzeug nachgebildete Fahrzeugkabine (4) mit realen Bedienelementen lässt sich mittels eines 6-achsigen Industrieroboters (1), der bodenseitig mittels einer Einrichtung (5) in translatorischer Längsbewegung verfahrbar ist, mittels einer externen Bedieneinheit bewegen, **dadurch gekennzeichnet, dass** a) der 6-achsige Industrieroboter bodenseitig mittels einer Einrichtung (6), welche auf der Einrichtung (5) im rechten Winkel verfahrbar montiert ist, auch in translatorischer Querbewegung verfahrbar ist,
b) dem Flugschüler eine simulierte Außenansicht mittels eines Displays in OLED-Technology anstelle der normalerweise durchsichtigen Flugzeugkanzel übermittelt wird,
c) zur Simulation von in der Praxis vorkommenden Gefahrensituationen steuerbare Anlagen vorgesehen sind zur künstlichen Raucherzeugung (12), zur Erzeugung von Rüttelbewegungen, zur Schallerzeugung und zur Erzeugung von Lichterscheinungen (14) in der Fahrzeugkabine (4),
d) zur Erfassung von menschlichen Stressreaktionen in der Fahrzeugkabine (4) steuerbare Anlagen zur Erfassung des Hautwiderstandes (10) und der Detektion von Personenbewegungen und der Physiognomie (16) vorgesehen sind, und
e) mittels eines Modulsystems (13) sich das verwendete Bedienfeld dem jeweils simulierten Flugzeugtyp rasch anpassen lässt.

7. Verfahren nach Anspruch 1,
**dadurch gekennzeichnet,**
**dass** zur Übermittlung einer simulierten Außenansicht anstelle der OLED-Technologie nach Merkmal b) eine Darstellung verwendet wird, die mittels Projektoren auf Projektionsflächen projiziert wird, die sich außerhalb der Fahrzeugkabine (4) befinden.

## Claims

1. Apparatus for operating a simulator with a special impression of reality for learning how to control a vehicle, in particular an aircraft, moving in three-dimensional reality, having a vehicle cab (4) modeled on the vehicle to be simulated and having real operator control elements, having a 6-axis industrial robot (1), which, on the one hand, is connected to the vehicle cab (4) and
having a device (5) for translatory longitudinal movement, **characterized in that** said apparatus has the following features:
a) the 6-axis industrial robot (1) is connected, on the other hand, to the ground via a device (6) for translatory lateral movement which is movably mounted at a right angle on the device (5) for translatory longitudinal movement,
b) a display modeled on the contours of the vehicle cab (4) serves to transmit a simulated external view on the basis of OLED technology,
c) for the purposes of simulating hazardous situations which occur in practice, controllable systems for artificially producing smoke (12), for producing shaking movements, for sound generation and for producing light phenomena (14) in the vehicle cab (4) are provided,
d) for detecting human stress reactions, controllable systems in the vehicle cab (4) for sensing the resistance (10) of the skin and for detecting movements of persons and physiognomy (16) are provided,
e) a sensor (17) for detecting the actual movements of the vehicle cab (4),
f) a system for externally operating and controlling the simulator, which system also registers the reactions of a fight trainer.

2. Apparatus for operating a simulator according to Claim 1,
**characterized**
**in that** in order to transmit a simulated external view, instead of the OLED technology according to feature b) a display is used which is projected by means of projectors onto projection surfaces which are located outside the vehicle cab (4).

3. Apparatus according to one of the preceding claims, **characterized**
**in that** the operator control panel of the vehicle cab (4) which is used can be quickly adapted to the respectively simulated aircraft type, in an easily exchangeable fashion, by means of a module system (13).

4. Apparatus according to one of the preceding claims, **characterized**
**in that** for the purpose of training, in particular helicopter pilots, a further projection surface which maps the ground area is also provided, and in that the vehicle cab (4) is equipped with a transparent floor panel.

5. Apparatus according to one of the preceding claims, **characterized in that** for the purpose of training in the military field for simulating hazardous situations which occur in practice, parameters which are relevant in terms of military technology, of an acoustic, optical and mechanical nature, are provided in the training program.

6. Method for operating a simulator with a special impression of reality for learning how to control a vehicle, in particular an aircraft, moving in three-dimensional reality,
wherein the method has the following features:
a vehicle cab (4) modeled on the vehicle to be simulated and having real operator control elements can be moved by means of an external operator control unit by means of a 6-axis industrial robot (1) which can be moved by means of a device (5) in a translatory longitudinal movement on the ground,
**characterized in that**
a) the 6-axis industrial robot can also be moved in a translatory lateral movement on the ground by means of a device (6) which is movably mounted at a right angle on the device (5),
b) a simulated external view is conveyed to the flight trainer by means of a display using OLED technology instead of the normally transparent aircraft cockpit,
c) for the purposes of simulating hazardous situations which occur in practice, controllable systems for artificially producing smoke (12), for producing shaking movements, for sound generation and for producing light phenomena (14) in the vehicle cab (4) are provided,
d) for detecting human stress reactions, in the vehicle cab (4) controllable systems for sensing the resistance (10) of the skin and detecting movements of persons and the physiognomy (16) are provided, and
e) the operator control panel used can be quickly adapted to the respectively simulated aircraft type by means of a module system (13).

7. Method according to Claim 1,
**characterized**
**in that** in order to convey a simulated external view, instead of the OLED technology according to feature b) a display is used which is projected by means of projectors onto projection surfaces which are located outside the aircraft cockpit (4).

## Revendications

1. Dispositif pour faire fonctionner un simulateur avec impression de réalité particulière en vue d'apprendre la maîtrise d'un véhicule qui se déplace dans la réalité tridimensionnelle, notamment un aéronef,
comprenant une cabine de véhicule (4) reproduisant le véhicule à simuler dotée d'éléments de commande réels, comprenant un robot industriel (1) à 6 axes qui est relié d'un côté avec la cabine de véhicule (4) et comprenant un appareil (5) servant à un mouvement longitudinal translatoire, **caractérisé en ce qu'**il possède les caractéristiques suivantes :
a) le robot industriel (1) à 6 axes est, de l'autre côté, relié avec le sol par le biais d'un appareil (6) servant à un mouvement transversal translatoire, lequel est monté sur l'appareil (5) servant à un mouvement longitudinal translatoire de manière à pouvoir se déplacer à angle droit,
b) un écran à base de technologie OLED sert à la communication d'une vue extérieure simulée qui reproduit les contours de la cabine de véhicule (4),
c) des équipements commandables servant à la production de fumée artificielle (12), à la production de mouvements de secousse, à la production de bruit et à la production de phénomènes optiques (14) se trouvent dans la cabine de véhicule (4) pour la simulation des situations de danger qui se produisent en pratique,
d) des équipements commandables destinés à détecter les réactions de stress humaines se trouvent dans la cabine de véhicule (4) pour détecter la résistance épidermique (10) et pour détecter des mouvements de personnes ainsi que la physionomie (16),
e) un capteur (17) destiné à détecter les mouvements réels de la cabine de véhicule (4),
f) un équipement servant à l'utilisation et à la commande externes du simulateur, lequel enregistre également les réactions d'un élève-pilote.

2. Dispositif pour faire fonctionner un simulateur selon la revendication 1, **caractérisé en ce que** la communication d'une vue extérieure simulée est effectuée en utilisant, à la place de la technologie à OLED selon la caractéristique b), une représentation qui est projetée sur des surfaces de projection à l'aide de projecteurs qui se trouvent à l'extérieur de la cabine de véhicule (4).

3. Dispositif selon l'une des revendications précédentes, **caractérisé en ce qu'**un système de modules (13) permet d'adapter rapidement et de manière facilement interchangeable le panneau de commande utilisé de la cabine de véhicule (4) en fonction du type d'aéronef simulé.

4. Dispositif selon l'une des revendications précédentes, **caractérisé en ce que** pour la formation, notamment des pilotes d'hélicoptère, il existe encore une surface de projection supplémentaire qui représente la zone du sol, et **en ce que** la cabine de véhicule (4) est équipée d'une plaque de plancher transparente.

5. Dispositif selon l'une des revendications précédentes, **caractérisé en ce que** pour la formation dans le secteur militaire, des paramètres de nature sonore, visuelle et mécanique, pertinents sur le plan de la technique militaire, sont prévus dans le programme de formation pour la simulation des situations de danger survenant en pratique.

6. Procédé pour faire fonctionner un simulateur avec impression de réalité particulière en vue d'apprendre la maîtrise d'un véhicule qui se déplace dans la réalité tridimensionnelle, notamment un aéronef, le procédé possédant les caractéristiques suivantes :
une cabine de véhicule (4) reproduisant le véhicule à simuler dotée d'éléments de commande réels peut être déplacée au moyen d'un robot industriel (1) à 6 axes qui, du côté du sol, peut être déplacé selon un mouvement longitudinal translatoire par le biais d'un appareil (5),
**caractérisé en ce que** :
a) le robot industriel à 6 axes, du côté du sol, peut également être déplacé selon un mouvement transversal translatoire par le biais d'un appareil (6) qui est monté sur l'appareil (5) de manière à pouvoir se déplacer à angle droit,
b) une vue extérieure simulée est communiquée à l'élève-pilote au moyen d'un écran en technologie OLED à la place du poste de pilotage d'aéronef normalement transparent,
c) des équipements commandables sont présents pour la simulation des situations de danger qui se produisent en pratique, servant à la production de fumée artificielle (12), à la production de mouvements de secousse, à la production de bruit et à la production de phénomènes optiques (14) dans la cabine de véhicule (4),
d) des équipements commandables destinés à détecter les réactions de stress humaines sont présents dans la cabine de véhicule (4) pour détecter la résistance épidermique (10) et pour détecter des mouvements de personnes ainsi que la physionomie (16), et
e) le panneau de commande utilisé peut être adapté rapidement au type d'aéronef respectivement simulé au moyen d'un système de modules (13).

7. Procédé selon la revendication 1, **caractérisé en ce qu'**à la place de la technologie à OLED selon la caractéristique b), une représentation qui est projetée à l'aide de projecteurs sur des surfaces de projection qui se trouvent à l'extérieur de la cabine de véhicule (4) est utilisée pour la communication d'une vue extérieure simulée.
